# EUROPÄISCHE PATENTSCHRIFT

(11) **EP 3 154 673 B1**
(45) Veröffentlichungstag und Bekanntmachung des Hinweises auf die Patenterteilung: **14.02.2018**
(21) Anmeldenummer: 15744852.3
(22) Anmeldetag: 09.06.2015
(51) Int. Cl.: B01J 8/36, B01J 8/34

(54) **WIRBELSCHICHTREAKTOR MIT HORIZONTALER RICHTUNG**
FLUIDIZED BED REACTOR WITH HORIZONTAL DIRECTION
RÉACTEUR À LIT FLUIDISÉ PRÉSENTANT UNE DIRECTION HORIZONTALE

(30) Priorität: 10.06.2014 AT 4572014
(43) Veröffentlichungstag der Anmeldung: 19.04.2017
(73) Patentinhaber: Technische Universität Wien, 1040 Wien (AT)
(72) Erfinder: SCHWAIGER, Karl, A-3430 Tulln (AT); HAIDER, Markus, A-1130 Wien (AT); HÄMMERLE, Martin, A-1140 Wien (AT)
(74) Vertreter: Ellmeyer, Wolfgang
(86) Internationale Anmeldenummer: PCT/AT2015/050145
(87) Internationale Veröffentlichungsnummer: WO 2015/188214

(56) Entgegenhaltungen:
- EP-A1- 1 072 855
- DE-A1- 10 144 747
- US-A- 2 419 245
- US-A1- 2010 290 970

## Beschreibung

Die vorliegende Erfindung betrifft einen Wirbelschichtreaktor, der eine in horizontaler Richtung strömende stationäre Wirbelschicht aus Schüttgut umfasst.

### STAND DER TECHNIK

Wirbelschichten sind Suspensionen eines festen Teilchenmaterials in einem von unten, der Schwerkraft entgegenwirkend, eingeblasenem Fluidisierungsgas. Unter "stationären Wirbelschichten" werden Wirbelschichten ohne nennenswerten Partikelaustrag an der Oberseite, d.h. zusammen mit dem Fluidisierungsgas, verstanden. Je feiner dabei die Partikel des Teilchenmaterials, des "Wirbelbetts", sind, umso geringer kann der Massenstrom bzw. die Geschwindigkeit des die Wirbelschicht passierenden Fluidisierungsgases sein, was sich in einer umso geringeren Hilfsleistung auswirkt. Solche Wirbelschichten finden vielerlei Anwendung in der chemischen Industrie, Petrochemie oder Energiewandlung (zirkulierende Wirbelschichten, Fließbettkühler). Die Verwendung solcher Wirbelschichtreaktoren als (Gegenstrom-)Wärmetauscher ist auch für innovative Konzepte der Energiewende interessant, wo feine Partikel als Wärmeträger- und Wärmespeichermedien verwendet werden.

Wirbelschichtreaktoren umfassen im Allgemeinen einen Düsenboden, durch den das Fluidisierungsgas aus einer darunter liegenden Windbox in den Reaktorraum eingeleitet wird, um dort durch Aufwirbelung eines Teilchenbetts die Wirbelschicht zu erzeugen. Dabei wird ganz allgemein zwischen diskreten und kontinuierlichen Düsenböden unterschieden.

Ein kontinuierlicher Düsenboden verteilt das der Windbox zugeführte Fluidisierungsgas gleichmäßig über im Wesentlichen die gesamte Bodenfläche des Reaktors, was konstruktiv mittels porösen oder entsprechend fein perforierten Boden- oder Verteilerplatten ("Lochplatten") gelöst wird: siehe z.B. GB 1.301.103 A.

Im Gegensatz dazu bestehen diskrete Düsenböden aus nebeneinander angeordneten Einzeldüsen, die nicht die gesamte Fläche abdecken, sondern das Fluidisierungsgas an diskreten Stellen (Öffnungen, Düsen) aus der Windbox durch die Verteilerplatte in den Reaktorraum einblasen, wo es sich erst über die gesamte Fläche des Reaktors verteilt; siehe z.B. US 4.841.884 A.

In US 4.257.171 A ist eine Abwandlung dieses Typs offenbart, bei der eine zweite, ebenfalls diskrete Öffnungen bzw. Düsen umfassende Verteilerplatte unterhalb der ersten angeordnet ist, um zu verhindern, dass Bettmaterial in die darunter liegende Windbox eindringt. Die Öffnungen/Düsen in der unteren Platte dieses doppelten Bodens sind nach oben hin mit einer Abdeckung versehen und darüber hinaus vorzugsweise gegenüber den oberen versetzt.

Zur Erhöhung der Energieeffizienz werden Wirbelschichtreaktoren möglichst nahe den Minimum-Fluidisierungsbedingungen betrieben, d.h. bei möglichst geringem Massenstrom des Fluidisierungsgases, sodass das Gas mit einer Geschwindigkeit knapp über dem so genannten "Lockerungspunkt" den Reaktor passiert. Zur Senkung des Fluidisierungsbedarfs können beispielsweise sehr feinteilige Partikel für das Wirbelbett verwendet werden, was allerdings den Nachteil mit sich bringt, dass sie (z.B. bei Abschaltung des Fluidisierungsstroms) leichter durch die Düsen der Verteilerplatte eines diskreten Düsenbodens bzw. die Löcher/Perforationen der Verteilerplatte eines kontinuierlichen Düsenbodens in die Windbox geraten können, was im Falle ähnlicher Partikel- und Lochdurchmesser zu einer Verstopfung der Löcher/Perforationen führen kann oder eine Verschmutzung der gesamten Gasverteilungsvorrichtung bewirken und zu deren Ausfall führen kann.

Um dies zu verhindern, muss bei kontinuierlichen Düsenböden eine dem Teilchenmaterial entsprechend fein perforierte bzw. mikroporöse Verteilerplatte eingesetzt werden, die in der Anschaffung und Instandhaltung kostspielig ist, vor allem aber den Strömungswiderstand für das Fluidisierungsgas und damit den Druckverlust erhöht, wodurch höhere Betriebsdrücke und damit ein höherer Energieaufwand erforderlich sind.

Dazu kommt, dass vor allem bei horizontal strömenden stationären Wirbelschichten, wie sie etwa bei Wirbelschichtwärmetauschern zum Einsatz kommen, sich in Fließrichtung unterschiedliche Pegelstände der Wirbelschicht einstellen. Kontinuierliche Düsenböden sind aufgrund des meist laminaren Strömungsverhaltens aber nicht in der Lage, Pegelstandsvariationen auszugleichen, weswegen ein entsprechend höherer Fluidisierungsdruck eingestellt werden muss, um die Wirbelschicht auch an den Stellen relativ hoher Pegelstände aufrechterhalten zu können.

Mit einem diskreten Düsenboden könnten die variierenden Pegelstände mittels Verwendung von Düsen mit hoher Gasgeschwindigkeit ausgeglichen werden. Da jedoch bei feinen Schüttgütern der zur Fluidisierung benötigte Massenstrom sehr gering ist, würden nur sehr wenige dieser Düsen benötigt werden, um den minimal benötigten Fluidisierungsstrom zu erzeugen, womit der Abstand der Düsen viel zu groß wäre, um das feine Schüttgut über die gesamte Bodenfläche des Wirbelschichtreaktors fluidisieren zu können. Zudem ist bei feinem Schüttgut die Gefahr groß, dass feinkörnige Partikel durch die Düsen gelangen.

Speziell bei sehr großen bzw. langen (gegebenenfalls serpentinenförmig ausgebildeten) Wirbelschichtreaktoren mit einer abgewickelten Gesamtlänge von mitunter über 100 m, wie sie in der chemischen Industrie und Energietechnik beispielsweise als Wirbelschichtwärmetauscher zu Einsatz kommen, können sich zwischen Einlass und Auslass des Schüttguts signifikant hohe Niveauunterschiede einstellen, die zum Strömungswiderstand durch den Reaktor proportional sind. Diese Niveauunterschiede würden zu höheren als für die eigentliche Funktion des Wirbelschichtreaktors erforderlichen Bauhöhen führen und damit auch das in Summe zu fluidisierende Bettinventar erhöhen.

Ziel der vorliegenden Erfindung war es daher, diesen Nachteil zumindest teilweise zu beseitigen.

### OFFENBARUNG DER ERFINDUNG

Dieses Ziel wird gemäß vorliegender Erfindung durch Bereitstellung eines Wirbelschichtreaktors gemäss Anspruch 1 erreicht, der eine in horizontaler Richtung strömende stationäre Wirbelschicht aus Schüttgut sowie zumindest eine Windbox und einen darüber angeordneten, diskreten oder kontinuierlichen Düsenboden, der gegebenenfalls eine Vielzahl von Düsen umfasst, zur Erzeugung und Stabilisierung der Wirbelschicht umfasst und dadurch gekennzeichnet ist, dass oberhalb der Wirbelschicht über einen Teil ihres Strömungswegs durch den Reaktor eine den aufsteigenden Fluidisierungsgasstrom begrenzende Deckplatte vorgesehen ist, in der zumindest eine Düse vorgesehen ist und an deren beiden Enden jeweils ein quer zur Strömungsrichtung der Wirbelschicht verlaufendes Unterlaufwehr vorgesehen ist.

Mittels einer solchen Deckplatte im Wirbelschichtreaktor der Erfindung, die den aufsteigenden Fluidisierungsgasstrom nach oben hin begrenzt und die ihrerseits an ihren Längsenden von jeweils einem Unterlaufwehr begrenzt ist, kann durch die Düse(n) in der Deckplatte über einen Druckverlust ein Rückstau des Fluidisierungsgasstroms erzeugt werden, wodurch sozusagen ein "Luftkissen" oberhalb der Wirbelschicht aufgeblasen wird, das den Pegelstand der Wirbelschicht in diesem Bereich herabdrückt bzw. verringert. Auf diese Weise können allzu große Pegelstandsunterschiede verringert oder zur Gänze ausgeglichen werden, um das Wirbelschichtinventar zu minimieren und die Bauhöhe gering zu halten. Die Größe des Druckverlusts wird dabei durch den Flächenanteil der Deckplatte an der gesamten Wirbelschicht sowie durch die Anzahl und Durchmesser der Düsen darin gesteuert werden.

Unter einer "Düse" ist hierin allgemein jede Vorrichtung oder Einrichtung zu verstehen, die den Druck des Fluidisierungsgases durch Begrenzung des Gasstroms regelt und dabei einen Druckverlust erzeugt. In Frage kommende Bauteile umfassen daher sowohl einfache Öffnungen oder Bohrungen mit beliebigem Querschnitt (z.B. Runddüsen, Schlitzdüsen) als auch regelbare Gasaus- bzw. -einlässe wie etwa Blenden, Drosseln, Ventile oder Sperrschieber, sowie sog. Beschleunigungsdüsen mit einem den Gasstrom stabilisierenden Einlaufrohr, vorzugsweise einem sich verjüngenden Einlaufrohr (Konfusor).

Unter einem "Wehr" wird hierin allgemein jedes die strömende Wirbelschicht ablenkende Hindernis verstanden, wie z.B. Widerstandsbleche, unabhängig davon, in welche Richtung der Partikelstrom abgelenkt wird. In bevorzugten Ausführungsformen umfasst der erfindungsgemäße Wirbelschichtreaktor Unter- und/oder Überlaufwehre, kann aber zusätzlich oder alternativ dazu auch seitliche Strömungsregler ("Umlaufwehre") umfassen.

Die Deckplatte kann die gesamte Reaktorbreite oder nur einen Teil davon abdecken, vorzugsweise die gesamte Breite, da eine seitliche Verankerung an der Reaktorwand ihre Stabilität erhöht, und liegt zudem vorzugsweise im Wesentlichen in einer horizontalen Ebene, um den Reaktor auch in umgekehrter Fließrichtung der Wirbelschicht betreiben zu können. Sie kann aber mitunter auch relativ zum Reaktorboden geneigt oder gestuft ausgeführt sein sein, z.B. in Richtung des abnehmenden Pegelstands aufwärts geneigt oder gestuft, um die Dicke des Luftkissens oberhalb der Wirbelschicht in Fließrichtung zu variieren.

Speziell wenn die Deckplatte die gesamte Reaktorbreite überspannt und so an den Reaktorseitenwänden abgestützt ist, kann sie auch als - massive oder doppelbödighohle - "Zwischendecke" unterhalb der eigentlichen Reaktordecke ausgeführt sein, die an einzelnen Stellen die als Düsen dienenden Öffnungen (Durchgangsbohrungen) aufweist. In diese sind gegebenenfalls Rohre eingesetzt, die eine den gewünschten Druckverlust erzeugende Verengung aufweisen können.

In bevorzugten Ausführungsformen der Erfindung ist an der Unterseite der Deckplatte zumindest ein weiteres Unterlaufwehr vorgesehen, um die Wirbelschicht im Bereich der Deckplatte in mehrere Abschnitte zu unterteilen und so den Pegelstandsausgleich über die Länge des Reaktors feiner abstimmen zu können.

Besonders bevorzugt ist zwischen jeweils zwei Unterlaufwehren zumindest eine Düse in der Deckplatte vorgesehen, um in jedem der so erzeugten Abschnitte den Druckverlust separat einstellen zu können. Es können allerdings auch sowohl Abschnitte mit Düse(n) in der Deckplatte als auch solche ohne Düse vorgesehen sein, wenn dadurch ein besserer Ausgleich der Pegelstände oder sonstige Vorteile beim Betrieb des Wirbelschichtreaktors ermöglicht werden, z.B. eine Kostenersparnis.

Beispielhaft sei eine Ausführungsform erwähnt, bei der ein zentraler Abschnitt mit Düse(n) in der Deckplatte von jeweils einem Abschnitt ohne Düse begrenzt wird, sowie eine, bei der ein oder mehrere Abschnitte mit Düse(n) von einem oder mehreren Abschnitten ohne Düse(n) gefolgt werden oder umgekehrt, wobei die Deckplatte im Bereich der düsenlosen Abschnitte gegebenenfalls geneigt oder gestuft ausgeführt ist.

Vorzugsweise ist jedoch zwischen jeweils zwei Unterlaufwehren, d.h. in jedem Abschnitt der Wirbelschicht, genau eine Düse in der Deckplatte vorgesehen, um den dadurch erzeugten Druckverlust leichter berechenbar zu machen und die Herstellungskosten zu minimieren. Aus ähnlichen Gründen ragen die Unterlaufwehre vorzugsweise jeweils im Wesentlichen gleich tief in die Wirbelschicht hinein und/oder sind in im Wesentlichen gleichem Abstand voneinander angeordnet.

In einer bevorzugten Ausführungsform reicht zumindest eines der beiden Unterlaufwehre an den Enden der Deckplatte bis zur Decke des Wirbelschichtreaktors. Auf diese Weise wird die Deckplatte zusätzlich gegen Verlagerungen aufgrund des von unten einwirkenden Gasdrucks stabilisiert.

Dabei kann in diesem ersten bzw. letzten Abschnitt der Wirbelschicht der Einlass bzw. Auslass des Schüttguts gleichzeitig als Gasauslass dienen, es kann aber auch oberhalb der Ebene der Deckplatte zumindest eine Düse im Unterlaufwehr oder auch in der Reaktorwand oder -decke vorgesehen sein. In ersterem Fall ist der Schüttguteinlass bzw. -auslass vorzugsweise mit einem, insbesondere regelbaren, Fördermechanismus, wie z.B. einer Zellradschleuse, ausgestattet; d.h. die Zufuhr bzw. Ableitung des Schüttguts in den bzw. aus dem Reaktor erfolgt gegen Über- oder Unterdruck.

In bevorzugten Ausführungsformen der Erfindung sind - alternativ oder zusätzlich zu den Unterlaufwehren - ein oder mehrere Überlaufwehre auf dem Düsenboden vorgesehen, um die Wirbelschicht in die oben beschriebenen Abschnitte zu unterteilen oder die durch die Unterlaufwehre erfolgende Unterteilung zu unterstützen.

In letzterem Fall sind die Überlaufwehre vorzugsweise im Wesentlichen in derselben vertikalen Ebene wie darüber liegende Unterlaufwehre angeordnet, insbesondere ist unterhalb jedes Unterlaufwehrs ein im Wesentlichen in derselben vertikalen Ebene liegendes Überlaufwehr vorgesehen, um für alle Abschnitte die räumliche Abteilung sowohl von oben als auch von unten zu bewirken, was wiederum die Steuerung des Pegelstandsausgleichs erleichtert.

Weiters können die im Düsenboden vorgesehenen Düsen und/oder die in der Deckplatte vorgesehenen Düsen unterschiedliche oder variierende Innendurchmesser aufweisen, wobei vorzugsweise die im Düsenboden vorgesehenen Düsen in Strömungsrichtung der Wirbelschicht abnehmende Innendurchmesser aufweisen und/oder die in der Deckplatte vorgesehenen Düsen in Strömungsrichtung der Wirbelschicht zunehmende Innendurchmesser aufweisen, um die Pegelstände der Wirbelschicht in den jeweiligen Abschnitten aneinander anzugleichen.

Zusätzlich können die Innendurchmesser aller im erfindungsgemäßen Wirbelschichtreaktor vorgesehenen Düsen verstellbar sein, um den Druckverlust an der jeweiligen Düse variieren und so an wechselnde Bedingungen anpassen zu können, z.B. wenn die Strömungsrichtung der Wirbelschicht durch den Reaktor umgekehrt wird.

Andere Bauteile und Komponenten, wie z.B. der Düsenboden und die Windbox, sind nicht speziell eingeschränkt, und es können jegliche auf dem Gebiet bekannte Ausführungsformen eingesetzt werden. Als Düsenboden können beispielsweise sowohl diskrete als auch kontinuierliche Düsenböden zum Einsatz kommen, was natürlich unter anderem von der Wahl des Schüttguts abhängt.

### KURZBESCHREIBUNG DER ZEICHNUNGEN

In der Folge wird die vorliegende Erfindung anhand der beiliegenden Zeichnungen detaillierter beschrieben, in denen Folgendes dargestellt ist.
Fig. 1 zeigt einen Wirbelschichtreaktor nach dem Stand der Technik.
Fig. 2 zeigt eine bevorzugte Ausführungsform des Wirbelschichtreaktors der vorliegenden Erfindung.
Fig. 3 ist eine Detailvergrößerung eines zentralen Abschnitts des Wirbelschichtreaktors aus Fig. 2.
Die Fig. 4 bis 6 zeigen weitere bevorzugte Ausführungsformen des Wirbelschichtreaktors der vorliegenden Erfindung.

### DETAILLIERTE BESCHREIBUNG DER ERFINDUNG

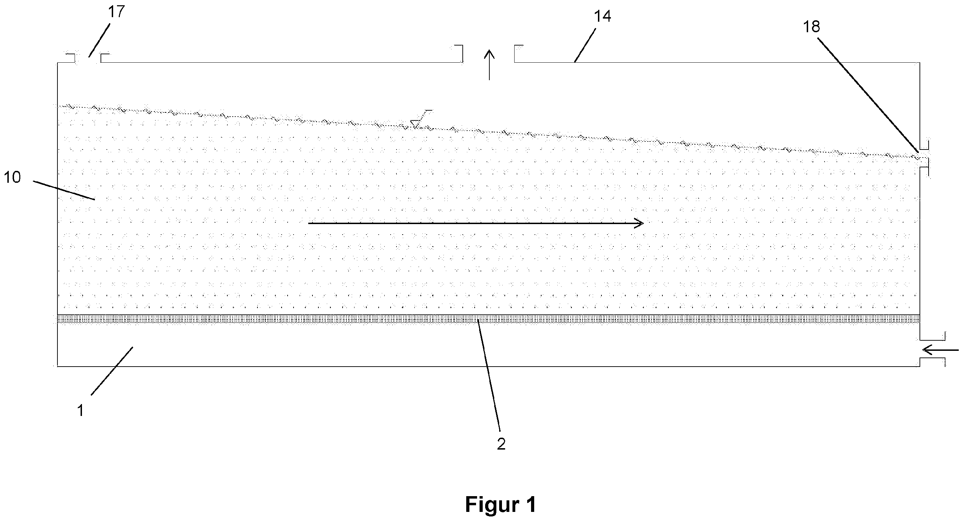

Wie erwähnt zeigt Fig. 1 einen Wirbelschichtreaktor nach dem Stand der Technik, umfassend eine Windbox 1 und einen - in diesem Fall - kontinuierlichen Düsenboden 2, der allerdings auch ein diskreter Düsenboden mit einer Vielzahl von Düsen sein kann. Oberhalb desselben befindet sich eine Wirbelschicht 10 aus fluidisiertem Schüttgut, die in dem hier dargestellten Fall aus einem Einlass 17 in Richtung des inmitten der Wirbelschicht eingezeichneten langen Pfeils, also von links nach rechts, zu einem Auslass 18 strömt. Das Fluidisierungsgas strömt seinerseits aus einem Einlass rechts unten durch den Düsenboden 2 hindurch, fluidisiert hier das Schüttgut und verlässt den Reaktor im Wesentlichen durch einen zentralen Auslass in der Decke 14 des Wirbelschichtreaktors, wie durch zwei kurze Pfeile angedeutet.

Wie in Fig. 1 zu erkennen, nimmt dabei der Pegelstand der Wirbelschicht in Strömungsrichtung ab (hier als kontinuierliche Abnahme dargestellt); ein Effekt, der speziell bei sehr langen Wirbelschichtreaktoren sowie bei solchen mit zahlreichen Einbauten, z.B. bei Wirbelschichtwärmetauschern, sehr ausgeprägt sein kann.

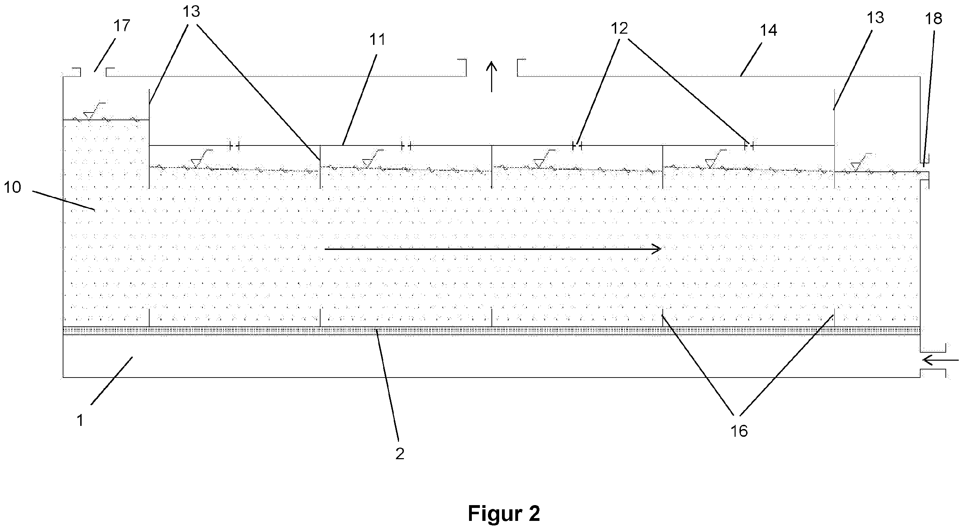

Durch die vorliegende Erfindung kann dieser Effekt nun weitestgehend ausgeglichen werden, indem - wie in einer bevorzugten Ausführungsform in Fig. 2 dargestellt - im Reaktor eine Deckplatte 11 ("Zwischendecke") oberhalb der Wirbelschicht vorgesehen wird, die mit einer oder mehreren Düsen 12 und zumindest an ihren Enden mit jeweils einem Unterlaufwehr 13, z.B. in Form von Widerstandsblechen, ausgestattet ist. Dadurch wird ein Druckverlust des Fluidisierungsgasstroms und damit sozusagen ein "Rückstau des Fluidisierungsgasstroms" oder ein "Luftkissen" oberhalb der Wirbelschicht erzeugt, das den Pegelstand der Wirbelschicht in diesem Bereich herabdrückt bzw. verringert.

Die Deckplatte 11 verläuft dabei vorzugsweise zwischen den beiden Seitenwänden (in Längsrichtung des Reaktors) und ist an diesen verankert, kann aber - je nach Breitendimension des Reaktors - zusätzlich oder alternativ dazu an der Decke 14 befestigt sein. Das Material ist nicht speziell eingeschränkt, und kann beispielsweise jedes beliebige gewählt werden, das üblicherweise für die Konstruktion von Wirbelschichtreaktoren und deren Einbauten zum Einsatz kommt, wie z.B. Edelstahl.

In Fig. 2 ist, wie erwähnt, eine bevorzugte Ausführungsform der Erfindung dargestellt, die zusätzlich zu den beiden Unterlaufwehren 13 an den Enden der Deckplatte 11 noch weitere Unterlaufwehre 13 in deren Verlauf aufweist. Dadurch wird die Wirbelschicht 10 in mehrere vertikale Abschnitte unterteilt, deren Pegelstände deutlich weniger voneinander abweichen.

Die Unterlaufwehre 13 sind hier gleichmäßig voneinander beabstandet, was bevorzugt ist, um die Auslegung des Wirbelschichtreaktors zu vereinfachen, aber nicht unbedingt der Fall sein muss. Bei bestimmten Verteilungen von Einbauten oder z.B. bei einem nichtlinearen Verlauf des Reaktors können die durchaus auch ungleiche Abstände bevorzugt sein. Analoges gilt für die Düsen 12 in der Deckplatte 11. In der dargestellten Ausführungsform ist zwischen jeweils zwei Unterlaufwehren 13 eine Düse 12 vorgesehen, und zwar jeweils zentral. Dies kann jedoch je nach den Gegebenheiten (Einbauten, linearer oder nichtlinearer Verlauf, Anordnung der Düsen in einem diskreten Düsenboden 2 usw.) entsprechend angepasst werden.

Weiters sind in Fig. 2 in besonders bevorzugter Weise Überlaufwehre 16 jeweils unterhalb der Unterlaufwehre 13 vorgesehen, was die Unterteilung der Wirbelschicht 10 in einzelne Abschnitte unterstützt und den Pegelstandausgleich begünstigt. Auch die Überlaufwehre 16 sind freilich nicht auf diese Anordnung eingeschränkt und können beispielsweise auch zu den Unterlaufwehren 13 versetzt und/oder in unregelmäßigen Abständen vorgesehen sein, wenn dies aufgrund der sonstigen Umstände vorteilhaft ist.

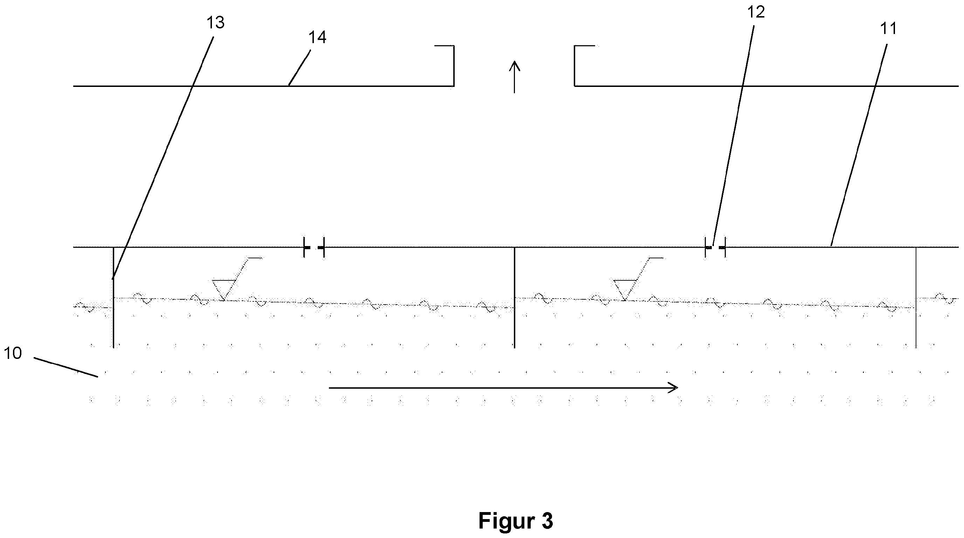

Fig. 3 ist eine vergrößerte Ansicht des zentalen Bereichs der Deckplatte 11 unterhalb des Auslasses für Fluidisierungsgas, aus der der Verlauf der Wirbelschicht 10 besser hervorgeht. Man erkennt zwischen je zwei Unterlaufwehren 13 eine kontinuierliche Abnahme des Pegelstands, bevor dieser nach dem nächsten Wehr 13 durch den "Rückstaueffekt" wieder ansteigt. Über die Länge des Wirbelschichtreaktors wird so ein sehr guter Ausgleich des Pegelstands der Wirbelschicht 10 erzielt.

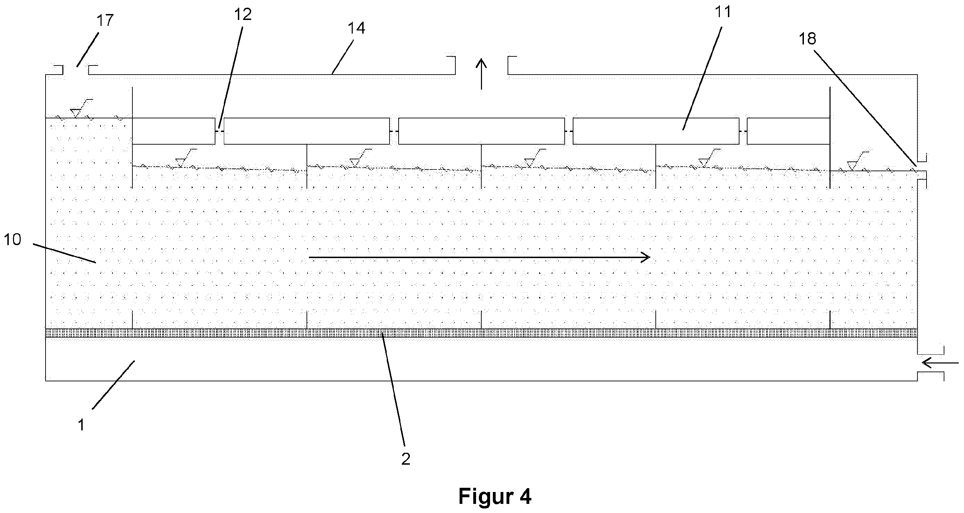

In Fig. 4 ist eine Variante der Ausführungsform aus Fig. 2 dargestellt, bei der die "Deckplatte" 11 als hohle oder "doppelbödige" Zwischendecke 11 ausgeführt ist, wodurch die Gasräume unterhalb und oberhalb der Zwischendecke nur durch Rohre miteinander verbunden sind, innerhalb derer sich die Düsen 12 befinden. Dies ermöglicht bessere Zugänglichkeit zu den Düsen, um diese z.B. im Schadensfall einfacher austauschen zu können.

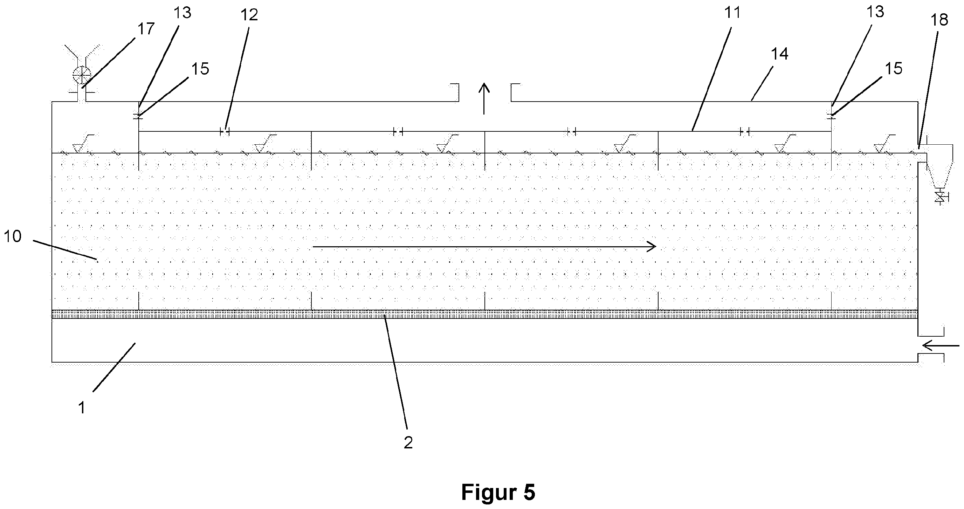

Fig. 5 zeigt ein besonders bevorzugte Ausführungsform der Erfindung, bei der der Einlass 17 und der Auslass 18 des Schüttguts jeweils absperrbar ausgeführt sind, z.B. mittels Ventilen, Absperrschiebern, -klappen oder -hähnen, wodurch ein semikontinuierlicher Betrieb des Wirbelschichtreaktors ermöglicht wird. Gleichzeitig reichen die beiden Unterlaufwehre 13 an den Enden der Deckplatte 11 bis zur Reaktordecke 14 und sind insbesondere auch mit Düsen, den Düsen 15, versehen. Dadurch ist der Fluidisierungsgasstrom zum zentralen Auslass hin noch besser regelbar, wodurch über die gesamte Länge des Wirbelschichtreaktors ein im Wesentlichen gleichmäßiger Pegelstand der Wirbelschicht 10 eingestellt werden kann.

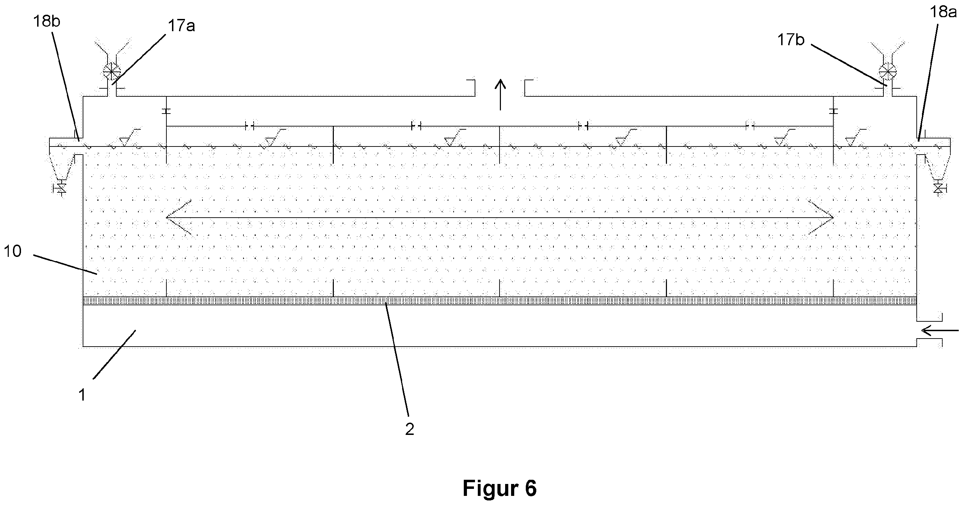

In einer in Fig. 6 dargestellten Variante dieser Ausführungsform weist der Wirbelschichtreaktor der vorliegenden Erfindung an beiden Enden jeweils einen absperrbaren Einlass 17 und Auslass 18 auf, die paarweise abwechselnd betreibbar sind und so einen Betrieb des Reaktors in beide Richtungen ermöglichen, wie dies durch den Doppelpfeil inmitten der Wirbelschicht 10 angedeutet ist. Bei Betrieb von links nach rechts werden Einlass 17a und Auslass 18a bedient, in die umgekehrte Richtung Einlass 17b und Auslass 18b, wobei da jeweils andere Paar durchwegs abgesperrt bleibt.

Wie bereits bei der Ausführungsform aus Fig. 5 kann der Pegelstand der Wirbelschicht 10 auch in diesem Fall über die gesamte Reaktorlänge auf einem im Wesentlichen einheitlichen Niveau gehalten werden - hier allerdings in beide Richtungen.

## Patentansprüche

1. Wirbelschichtreaktor, umfassend eine in horizontaler Richtung strömende stationäre Wirbelschicht (10) aus Schüttgut sowie zumindest eine Windbox (1) und einen darüber angeordneten, diskreten oder kontinuierlichen Düsenboden (2), der gegebenenfalls eine Vielzahl von Düsen umfasst, zur Erzeugung und Stabilisierung der Wirbelschicht (10),
**dadurch gekennzeichnet, dass** oberhalb der Wirbelschicht (10) über einen Teil ihres Strömungswegs durch den Reaktor eine den aufsteigenden Fluidisierungsgasstrom begrenzende Deckplatte (11) vorgesehen ist, in der zumindest eine Düse (12) vorgesehen ist und an deren beiden Enden jeweils ein quer zur Strömungsrichtung der Wirbelschicht verlaufendes Unterlaufwehr (13) vorgesehen ist,
wobei die im Düsenboden (2) vorgesehenen Düsen und/oder die in der Deckplatte (11) vorgesehenen Düsen (12) in Strömungsrichtung der Wirbelschicht unterschiedliche Innendurchmesseraufweisen und/oderin unterschiedlicher Anzahl pro Flächeneinheit vorhanden sind.

2. Wirbelschichtreaktor nach Anspruch 1, **dadurch gekennzeichnet, dass** die im Düsenboden (2) vorgesehenen Düsen in Strömungsrichtung der Wirbelschicht (10) abnehmende Innendurchmesser aufweisen.

3. Wirbelschichtreaktor nach Anspruch 1 oder 2, **dadurch gekennzeichnet, dass** die in der Deckplatte (11) vorgesehenen Düsen (12) in Strömungsrichtung der Wirbelschicht (10) zunehmende Innendurchmesser aufweisen

4. Wirbelschichtreaktor nach einem der Ansprüche 1 bis 3, **dadurch gekennzeichnet, dass** die Innendurchmesser mancher oder aller der im Düsenboden (2) vorgesehenen Düsen und/oder mancher oder aller der in der Deckplatte (11) vorgesehenen Düsen (12) verstellbar sind.

5. Wirbelschichtreaktor nach einem der Ansprüche 1 bis 4, **dadurch gekennzeichnet, dass** die Deckplatte (11) im Wesentlichen in einer horizontalen Ebene liegt.

6. Wirbelschichtreaktor nach einem der Ansprüche 1 bis 5, **dadurch gekennzeichnet, dass** an der Unterseite der Deckplatte (11) zumindest ein weiteres Unterlaufwehr (13) vorgesehen ist.

7. Wirbelschichtreaktor nach Anspruch 6, **dadurch gekennzeichnet, dass** zwischen jeweils zwei Unterlaufwehren (13) zumindest eine Düse (12) in der Deckplatte (11) vorgesehen ist.

8. Wirbelschichtreaktor nach Anspruch 7, **dadurch gekennzeichnet, dass** zwischen jeweils zwei Unterlaufwehren (13) genau eine Düse (12) in der Deckplatte (11) vorgesehen ist.

9. Wirbelschichtreaktor nach einem der Ansprüche 1 bis 8, **dadurch gekennzeichnet, dass** alle Unterlaufwehre (13) jeweils im Wesentlichen gleich tief in die Wirbelschicht (10) hinein ragen.

10. Wirbelschichtreaktor nach einem der Ansprüche 1 bis 9, **dadurch gekennzeichnet, dass** die Unterlaufwehre (13) in im Wesentlichen gleichem Abstand voneinander angeordnet sind.

11. Wirbelschichtreaktor nach einem der Ansprüche 1 bis 10, **dadurch gekennzeichnet, dass** zumindest eines der beiden Unterlaufwehre (13) an den Enden der Deckplatte (11) bis zur Decke (14) des Wirbelschichtreaktors reicht.

12. Wirbelschichtreaktor nach Anspruch 11, **dadurch gekennzeichnet, dass** in dem zumindest einen bis zur Decke (14) des Wirbelschichtreaktors reichenden Unterlaufwehr (13) oberhalb der Ebene der Deckplatte (11) zumindest eine Düse (15) vorgesehen ist.

13. Wirbelschichtreaktor nach einem der Ansprüche 1 bis 12, **dadurch gekennzeichnet, dass** auf dem Düsenboden (2) ein oder mehrere Überlaufwehre (16) vorgesehen sind.

14. Wirbelschichtreaktor nach Anspruch 13, **dadurch gekennzeichnet, dass** die Überlaufwehre (16) im Wesentlichen in derselben vertikalen Ebene wie darüber liegende Unterlaufwehre (13) angeordnet sind.

15. Wirbelschichtreaktor nach Anspruch 14, **dadurch gekennzeichnet, dass** unterhalb jedes Unterlaufwehrs (13) ein im Wesentlichen in derselben vertikalen Ebene liegendes Überlaufwehr (16) vorgesehen ist.

## Claims

1. A fluidized bed reactor, comprising a stationary fluidized bed (10) of bulk materials flowing in a horizontal direction as well as at least one wind box (1) and a discrete or continuous nozzle floor (2) above, optionally comprising a plurality of nozzles, to produce and stabilize said fluidized bed (10),
**characterized in that** a cover plate (11) is provided above said fluidized bed (10) above a section of its flow path through the reactor, said cover plate (11) limiting the rising fluidizing gas flow and comprising at least one nozzle (12) and, at each of its ends, one underflow weir (13) extending transversely across the fluidized bed's flow direction,
wherein said nozzles provided in the nozzle floor (2) and/or the nozzles (12) provided in the cover plate (11) have different inner diameters and/or are present in different numbers per unit area in the flow direction of the fluidized bed.

2. The fluidized bed reactor according to claim 1, **characterized in that** the nozzles provided in the nozzle floor (2) have inner diameters which decrease in the flow direction of the fluidized bed (10).

3. The fluidized bed reactor according to claim 1 or claim 2, **characterized in that** the nozzles (12) provided in the cover plate (11) have inner diameters which increase in the flow direction of the fluidized bed (10).

4. The fluidized bed reactor according to anyone of the claims 1 to 3, **characterized in that** the inner diameters of some or all of the nozzles provided in the nozzle floor (2) and/or of some or all of the nozzles (12) provided in the cover plate (12) are adjustable.

5. The fluidized bed reactor according to any one of the claims 1 to 4, **characterized in that** said cover plate (11) is arranged essentially in a horizontal plane.

6. The fluidized bed reactor according to any one of the claims 1 to 5, **characterized in that** at least one further underflow weir (13) is provided on the bottom side of said cover plate (11).

7. The fluidized bed reactor according to claim 6, **characterized in that** at least one nozzle (12) is provided in said cover plate (11) between each two underflow weirs (13).

8. The fluidized bed reactor according to claim 7, **characterized in that** exactly one nozzle (12) is provided in said cover plate (11) between each two underflow weirs (13).

9. The fluidized bed reactor according to any one of the claims 1 to 8, **characterized in that** all underflow weirs (13) extend essentially to the same depth of the fluidized bed (10).

10. The fluidized bed reactor according to any one of the claims 1 to 9, **characterized in that** said underflow weirs (13) are spaced apart essentially by the same distances.

11. The fluidized bed reactor according to any one of the claims 1 to 10, **characterized in that** at least one of the two underflow weirs (13) at the ends of the cover plate (11) extends to the fluidized bed reactor's ceiling (14).

12. The fluidized bed reactor according to claim 11, **characterized in that** at least one nozzle (15) is provided above the level of the cover plate (11) in said at least one underflow weir (13) extending to the fluidized bed reactor's ceiling (14).

13. The fluidized bed reactor according to any one of the claims 1 to 12, **characterized in that** one or several overflow weirs (16) is/are provided on the nozzle floor (2).

14. The fluidized bed reactor according to claim 13, **characterized in that** said overflow weirs (16) are arranged essentially in the same vertical plane as the underflow weirs (13) above them.

15. The fluidized bed reactor according to claim 14, **characterized in that** below each underflow weir (13) an overflow weir (16) is provided in essentially the same vertical plane.

## Revendications

1. Réacteur à lit fluidisé, comprenant un lit fluidisé de matériau en vrac circulant dans une direction horizontale et au moins une boîte à vent (1) et, positionné au-dessus de celle-ci, un fond (2) à buses discret ou continu, qui comprend éventuellement une pluralité de buses, pour produire et stabiliser le lit fluidisé,
**caractérisé en ce que,** au-dessus dudit lit fluidisé (10), longeant une partie de son chemin de circulation à travers ledit réacteur, est prévue une plaque (11) de recouvrement, qui limite le courant montant de gaz de fluidisation, dans laquelle est prévue au moins une buse (12) et dont les deux extrémités comprennent chacune un barrage (13) de décharge transversal à la direction de circulation dudit lit fluidisé,
lesdites buses prévues dans ledit fond (2) à buses et/ou lesdites buses (12) prévues dans ladite plaque (11) de recouvrement ayant des diamètres intérieurs différents dans la direction de circulation dudit lit fluidisé et/ou étant présentes dans un nombre différent par unité de surface.

2. Réacteur à lit fluidisé selon la revendication 1, **caractérisé en ce que** lesdites buses prévues dans ledit fond (2) à buses ont des diamètres intérieurs diminuants dans la direction de circulation dudit lit fluidisé (10).

3. Réacteur à lit fluidisé selon l'une des revendications 1 ou 2, **caractérisé en ce que** lesdites buses (12) prévues dans ladite plaque (11) de recouvrement ont des diamètres intérieurs croissants dans la direction de circulation dudit lit fluidisé (10).

4. Réacteur à lit fluidisé selon l'une quelconque des revendications 1 à 3, **caractérisé en ce que** le diamètre intérieur de quelques-unes des ou de toutes lesdites buses prévues dans ledit fond (2) à buses et/ou de quelques-unes des ou de toutes lesdites buses (12) prévues dans ladite plaque (11) de recouvrement sont réglables.

5. Réacteur à lit fluidisé selon l'une quelconque des revendications 1 à 4, **caractérisé en ce que** ladite plaque (11) de recouvrement est essentiellement placée dans un plan horizontal.

6. Réacteur à lit fluidisé selon l'une quelconque des revendications 1 à 5, **caractérisé en ce qu'**au moins un autre barrage (13) de décharge est prévu sur la face inférieure de ladite plaque (11) de recouvrement.

7. Réacteur à lit fluidisé selon la revendication 6, **caractérisé en ce que**, dans ladite plaque (11) de recouvrement, entre chaque paire de barrages (13) de décharge, est prévue au moins une buse (12).

8. Réacteur à lit fluidisé selon la revendication 7, **caractérisé en ce qu'**exactement une buse (12) est prévue entre lesdits au moins deux barrages (13) de décharge dans ladite plaque (11) de recouvrement.

9. Réacteur à lit fluidisé selon l'une quelconque des revendications 1 à 8, **caractérisé en ce que** tous lesdits barrages (13) de décharge dépassent dans ledit lit fluidisé (10), essentiellement sur une profondeur uniforme.

10. Réacteur à lit fluidisé selon l'une quelconque des revendications 1 à 8, **caractérisé en ce que** lesdits barrages (13) de décharge sont essentiellement espacés de façon uniforme les uns des autres.

11. Réacteur à lit fluidisé selon l'une quelconque des revendications 1 à 8, **caractérisé en ce qu'**au moins un desdits deux barrages (13) de décharge aux extrémités de ladite plaque (11) de recouvrement arrivent jusqu'au plafond (14) dudit réacteur à lit fluidisé.

12. Réacteur à lit fluidisé selon la revendication 11, **caractérisé en ce que** dans ledit au moins un barrage (13) de décharge arrivant au plafond (14) dudit réacteur à lit fluidisé est prévue au moins une buse (15) au-dessus du plan de la plaque (11) de recouvrement.

13. Réacteur à lit fluidisé selon l'une quelconque des revendications 1 à 12, **caractérisé en ce que** sur le fond (2) à buses est/sont prévu(s) un ou plusieurs barrages (16) de trop-plein.

14. Réacteur à lit fluidisé selon la revendication 13, **caractérisé en ce que** les barrages (16) de trop-plein sont essentiellement placés dans le même plan vertical que les barrages (13) de décharge au-dessus de ceux-ci.

15. Réacteur à lit fluidisé selon la revendication 14, **caractérisé en ce que** en dessous de chaque barrage (13) de décharge est prévu un barrage (16) de trop-plein, placé essentiellement dans le même plan vertical.
